Europäisches Patentamt

(19) European Patent Office

Office européen des brevets

(11) Publication number: **0 057 950**
**B1**

(12) **EUROPEAN PATENT SPECIFICATION**

(45) Date of publication of patent specification: **24.10.84**

(51) Int. Cl.³: **F 16 L 1/04, B 63 B 35/44**

(21) Application number: **82200078.2**

(22) Date of filing: **22.01.82**

(54) **Articulated conduit system for a floating body.**

(30) Priority: **05.02.81 NL 8100564**

(43) Date of publication of application:
**18.08.82 Bulletin 82/33**

(45) Publication of the grant of the patent:
**24.10.84 Bulletin 84/43**

(84) Designated Contracting States:
**DE FR GB IT NL**

(56) References cited:
**DE-A-2 848 920**
**DE-B-1 299 473**
**DE-C-1 065 293**
**GB-A-2 045 200**
**US-A-3 823 432**
**US-A-3 999 498**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **van der Graaf, Gerhardus Cornelis**
**Carel van Bylandtlaan 30**
**NL-2596 HR The Hague (NL)**

(74) Representative: **Puister, Antonius Tonnis, Mr. et al**
**P.O. Box 302**
**NL-2501 CH The Hague (NL)**

Courier Press, Leamington Spa, England.

## Description

The invention relates to an articulated conduit system for providing communication between conduits (such as pipelines or electric cables) arranged on or close to the bottom of a body of water and conduits on a body floating on the water surface.

When producing oil or gas from an underwater oil or gas field via a body floating on the water surface (such as a floating production unit or a floating loading unit) communication should be provided between a plurality of conduits on the water bottom and a plurality of conduits on the floating body by means of a plurality of communication conduits. Examples of such communication conduits are fluid communication conduits (such as pipelines for transporting oil or gas, pipelines for injecting water, steam, gas or chemicals into wells, hydraulic conduits for monitoring the oil and/or gas production, and hydraulic conduits for supplying power to equipment), and electric communication conduits (such as signal cables for monitoring the oil and/or gas production, measuring and control lines for operating underwater well equiment, and power supply cables for electric equipment).

Usually the floating body is kept on location by connecting the floating body to anchors in the water bottom by means of anchor cables. These cables do not prevent oscillating movements of the floating body that result from wind, wave or current forces. This raises the problem of providing a flexible or articulated communication between the conduits on the water bottom and corresponding conduits on the floating body.

It is known in the prior art (e.g. from US—A—3 823 432) to connect a single pipeline on the sea bed to a buoy via an intermediate pipeline including universal joints.

The object of the invention is to provide an articulated conduit system for creating communication between a plurality of conduits on the bottom of a body of water and a plurality of conduits on a floating body, said conduit system allowing oscillating movement of the floating body, wherein damage to the conduits as a result of such movements is obviated.

The articulated conduit system according to the invention is suitable for providing communication between conduits (such as pipelines or electric cables) arranged on or close to the bottom of a body of water and conduits on a body floating on the water surface, and includes a first group of substantially parallel conduits and a second group of substantially parallel conduits, each conduit of the first group at one end thereof communicating with one end of a corresponding conduit of the second group by means of a universal joint, each conduit of the first group at the other end thereof carrying a pivot joint adapted for coupling the conduit to a corresponding conduit on the water bottom, the pivot points of these joints being located on a first axis, the pivot points of the universal joints between the first and second group being located on a second axis substantially parallel to the first axis, the first group of conduits extending between the first and second axis forming part of a mechanical structure of low torsional rigidity, and the other ends of the conduits of the second group being provided with coupling means adapted for coupling these conduits to conduits on the floating body.

In an attractive embodiment of the conduit system according to the invention the second group of conduits forms part of a mechanical structure of low rigidity, and the coupling means at the other ends of the conduits of the second group are universal joints, the pivot points of these joints being located on a third axis substantially parallel to the second axis.

The first group of conduits of the conduit system according to the invention may be combined with a frame of low torsional rigidity to form the mechanical structure of low torsional rigidity. The frame is then provided with pivots having the pivot points thereof located on the first axis, and with pivots having the pivot points thereof located on the second axis.

The invention will now be explained by way of example in more detail with reference to the drawings, wherein:

Fig. 1 shows a perspective view of a floating body having conduits thereof in communication with conduits on the bottom of a water by means of two articulated conduit systems according to the invention.

Fig. 2 shows, on a larger scale, a perspective view of part of one of the articulated conduit systems shown in Fig. 1.

Fig. 3 shows, on a larger scale, a perspective view of a detail of the second group of conduits, which detail is ringed in Fig. 2.

Fig. 4 shows, on the same scale as Fig. 2, a perspective view of another construction of the articulated conduit system according to the invention.

Fig. 5 shows a diagrammatic perspective view of the articulated conduit system according to Fig. 1 and Fig. 2 seen in horizontal direction normal to the pivot axes.

Fig. 6 shows a diagrammatic perspective view of the articulated conduit system of Fig. 5 in deformed condition as a result of a rotation of the floating body about a horizontal axis.

Fig. 7 shows a diagrammatic perspective view of the articulated conduit system of Fig. 5 in deformed condition as a result of a horizontal translation of the floating body.

Fig. 8 shows a diagrammatic perspective view of the articulated conduit system in the same position as in Fig. 5, but seen in horizontal direction parallel to the pivot axes.

Fig. 9 shows the conduit system of Fig. 8 in deformed condition as a result of a rotation of the floating body about a vertical axis.

Fig. 10 shows the conduit system of Fig. 8, the third axis being displaced in a direction normal to its own longitudinal direction.

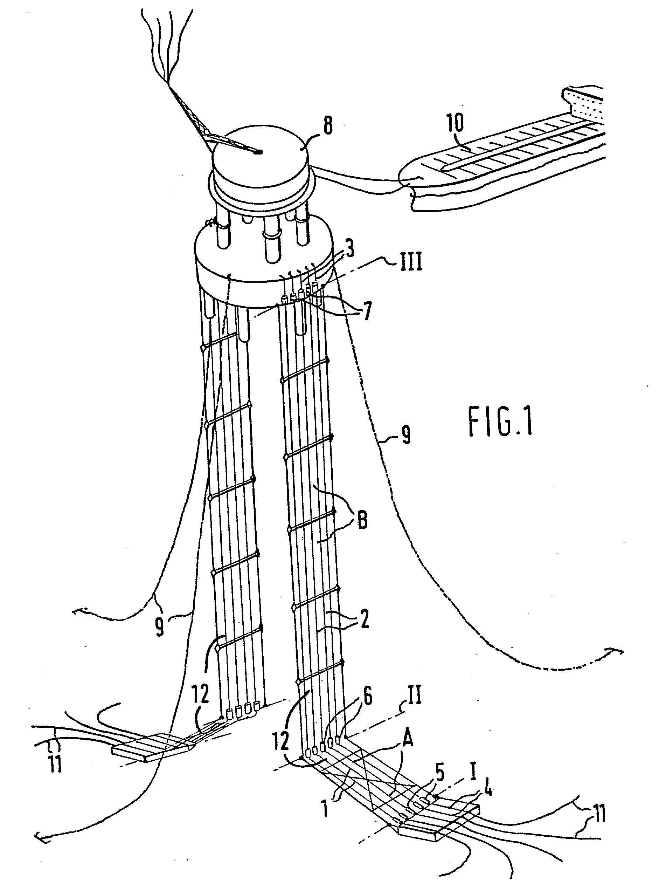

Fig. 1 shows a floating body in the form of a production unit 8, floating on the water surface and anchored to the bottom of a body of water by means of anchors and anchor cables 9. An export tanker 10 is moored to the production unit 8. Conduits 3 on the production unit 8 communicate with conduits 11 located on the bottom of the body of water by means of two articulated conduit systems 12 according to the invention.

The articulated conduit system 12 located at the front of the production unit 8 is of the same design as the articulated conduit system 12 located at the rear of the production unit 8. The conduit system 12 located at the front of the production unit 8 will now be described. The conduit system 12 is built up of a first group A of substantially parallel conduits 1 and a second group B of substantially parallel conduits 2. The lower end of the conduit system 12 communicates with the ends 4 of the conduits 11 located on the bottom of the water, whereas the upper end of conduit system 12 communicates with the conduits 3 located on the production unit 8.

Each conduit 1 of the first group A communicates at one end thereof with the end 4 of a corresponding conduit 11 by means of a pivot joint 5, The pivot point of each joint 5 being located on a first substantially horizontal axis I. Further, each conduit 1 communicates at the other end thereof with the lower end of a corresponding conduit 2 of the second group B by means of a universal joint 6, the pivot point of each joint 6 being located on a second axis II. This second axis II is substantially parallel to the first axis I.

Each conduit 2 of the second group B communicates at the upper end thereof with a conduit 3 on the production unit 8 by means of a universal joint 7, the pivot point of each joint 7 being located on a third axis III. This third axis III is substantially parallel to the second axis II.

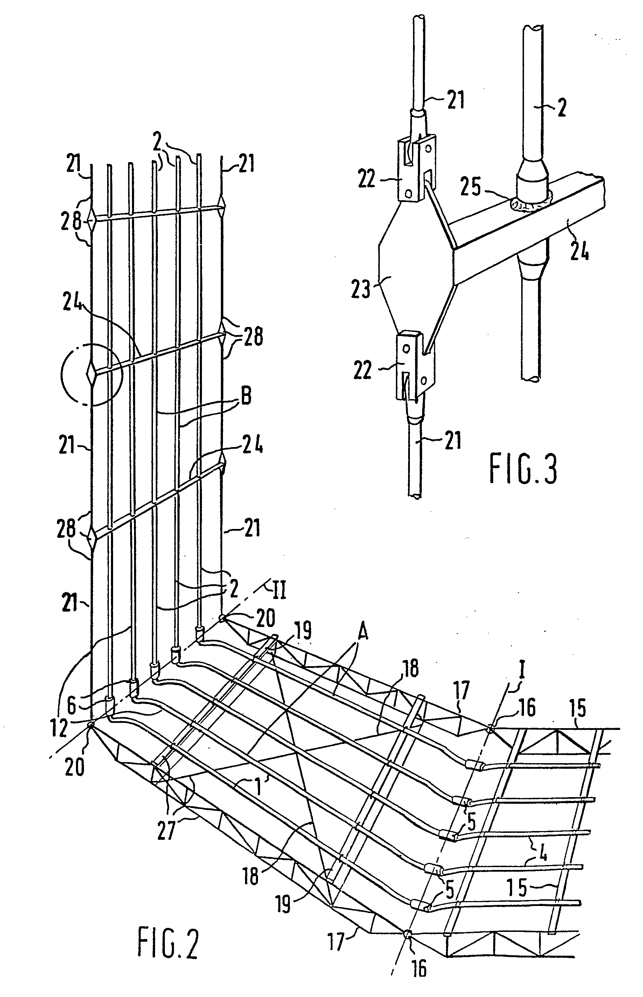

Fig. 2 shows the lower part of the flexible conduit system 12 of Fig. 1 in more detail. The ends 4 of the conduits 11 are located near the water bottom and supported by a substantially rigid foundation frame 15, which frame 15 is fixedly secured to the water bottom.

Each end 4 communicates with a corresponding conduit 1 of the first group A by means of a pivot joint 5, the pivot point of each joint 5 being located on the first axis I.

Each conduit 1 of the first group A communicates at the other end thereof with the lower end of a corresponding conduit 2 of the second group B by means of a universal joint 6, the pivot point of each joint 6 being located on the second axis II.

The conduits 1 of the first group A are combined with a frame 27 of low torsional rigidity to form a mechanical structure of low torsional rigidity. The frame 27 comprises two longitudinal girders 17 running substantially parallel to the conduits 1, and two tie rods 18 arranged diagonally between the longitudinal girders, wherein the ends of the tie rods 18 are pivotally or flexibly connected to the longitudinal girders 17.

The frame 27 further comprises two spacer members 19 transversely arranged between the longitudinal girders 17, wherein the ends of the spacer elements 19 are pivotally or flexibly connected to the longitudinal girders 17.

Each conduit 1 is flexibly connected to the spacer elements 19, in such a way that the conduits 1 are substantially parallel to each other and to the longitudinal girders 17.

Each longitudinal girder 17 is at one end thereof pivotally connected to the foundation frame 15 by means of a universal joint 16, the pivot point of each joint 16 being situated on the first axis I.

Each longitudinal girder 17 is at the other end thereof pivotally connected to the lower end of a support 28 by means of a universal joint 20, the pivot point of each joint 20 being situated on the second axis II. The upper end (not shown) of each support 28 is pivotally conntected to the floating production unit (not shown) by means of a universal joint (not shown), the pivot point thereof being situated on the third axis III (see Fig. 1). Each support 28 consists of rods 21 and linking elements 23, each rod 21 being pivotally connected to a corresponding linking element 23 in a way as shown more in detail in Fig. 3.

Fig. 3 shows in detail a connection between a linking element 23 and the ends of two rods 21 by means of pivots 22 that can pivot in all directions. Each linking element 23 is fixedly connected to an end of a spacer 24. Fig. 3 shows further a flexible connection between the spacer 24 and a conduit 2 by means of a flexible connecting element 25, that laterally supports the conduit 2 with respect to spacer 24.

It will be understood that in the articulated conduit system shown in the Figures 1, 2 and 3, each conduit 2 of the second group of conduits B is flexibly supported by the spacers 24. The spacers 24 are distributed over the length of the second group B of conduits 2, wherein the spacers 24 are substantially parallel to the second axis II and the third axis III. The supports 28 are substantially parallel to the longitudinal direction of the conduits 2. As the connections between the rods 21, the spacer 24, and the conduits 2 are of a flexible nature, the second group B of the conduits 2 forms part of a structure of low rigidity and as will be explained later on, oscillating displacements of the floating platform can thus be allowed without damaging effects to the conduits 2.

In order to prevent the conduits 2 from being overloaded by excessive stresses, each conduit 2 may be provided with a stress compensation loop (not shown) or with a telescopic joint (not shown). Furthermore, the supports 28 may be preloaded with a ballast weight (not shown).

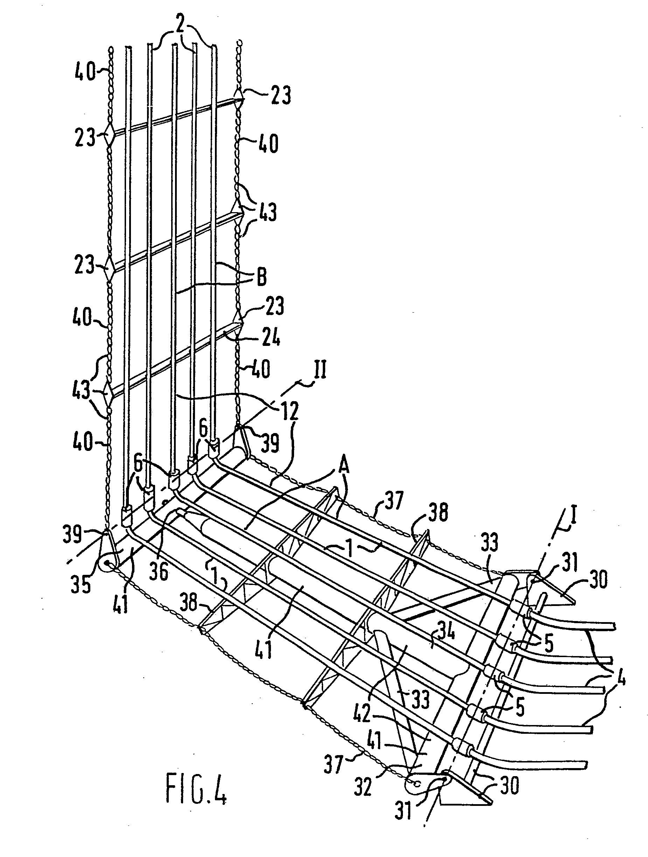

Fig. 4 shows an alternative construction of the articulated conduit system 12 according to the invention. In this construction, the ends 4 of the conduits 11 (see Fig. 1) are located on the water bottom. The ends 4 communicate with corresponding conduits 1 of a first group A by means of pivot joints 5, the pivot point of each joint 5 being located on a first substantially horizontal axis I.

Each conduit 1 of the first group A communicates at its upper end with the lower end of a corresponding conduit 2 of a second group B by means of a universal joint 6, the pivot point of each joint 6 being located on the second axis II. This second axis II is substantially parallel to the first axis I.

The conduits 2 of the second group B each communicate at the upper end thereof (not shown) with a conduit (not shown) located on a floating body (not shown) by means of a universal joint (not shown), wherein the pivot point of each universal joint is located on a third axis III (see Fig. 1), the third axis III being substantially parallel to the second axis II.

In order to allow the second axis II to be rotated with respect to the first axis I, the first group A is combined with a frame 41 of low torsional rigidity. The frame 41 is H-shaped, comprising a T-shaped element 42 and a transverse beam 35, wherein the transverse beam 35 is connected to the T-shaped element 42 by means of a pivot 36.

The rigid T-shaped element 42 consists of a longitudinal beam 34 attached at the lower end thereof to a cross beam 32. Beams 33 being provided for reinforcing the T-shaped element 42.

The cross beam 32 runs parallel to the first axis I and is connected by pivots 31 to a foundation frame 30 secured to the water bottom. The pivot axes of the pivots 31 coincide with the first axis I.

The longitudinal beam 34 runs substantially parallel to the conduits 1 of the first group A. The transverse beam 35 is connected to the upper end of the longitudinal beam 34 by means of the pivot 36, the pivot axis of the pivot 36 being parallel to or coinciding with the centre-line of the longitudinal beam 34. Two chains 37 are arranged between the ends of the transverse beam 35 and the ends of the cross beam 32, which chains 37 are further connected to the ends of spacer members 38 of the first group A. The spacer members 38 are transversely arranged in relation to the longitudinal direction of the conduits 1 of the first group A, and are pivotally connected to the longitudinal beam 34. The conduits 1 are flexibly connected to the spacer members 38.

The transverse beam 35 runs parallel to axis II and is pivotally connected to supports 43 of the second group B in a manner allowing each support 43 to pivot around a pivot point 39 located on axis II.

Together with linking elements 23, chains 40 form the supports 43 of the second group B, which supports 43 form a flexible connection between the transverse beam 35 and the floating production unit 8. The upper ends (not shown) of the supports 43 are connected to a floating body (not shown, the point of connection between each support 43 and the floating body (not shown) being located on axis III (see Fig. 1).

Each linking element 23 is secured to an end of a spacer member 24. The spacer members 24 flexibly support the conduits 2 of the second group B against lateral displacement in the same manner as shown in detail in Fig. 3. In order to avoid buckling of the conduits 2 a predetermined tension load may be created in the supports 43. The transverse beam 35 may thereto be provided with suitable ballast weights (not shown).

The conduits 1 of the first group A and the conduits 2 of the second group B may be provided with compensation loops (not shown) or with telescopic conduit sections (not shown) in order to avoid excessive stresses in the conduits in the situation that the articulated conduit system 12 is in a torsionally deformed condition.

It will be appreciated that the joints 5, 6 and 7 for interconnecting the conduits 4, 1, 2 and 3 (see Fig. 1) may be of any suitable type. For instance, in the situation that the conduits 4, 1, 2 and 3 are substantially rigid fluid conduits, the joints 5, 6 and 7 may be ball joints or flexible conduit sections. In the situation that the conduits 4, 1, 2 and 3 are flexible electric cables the joints 5, 6 and 7 may be integrated parts of the cables.

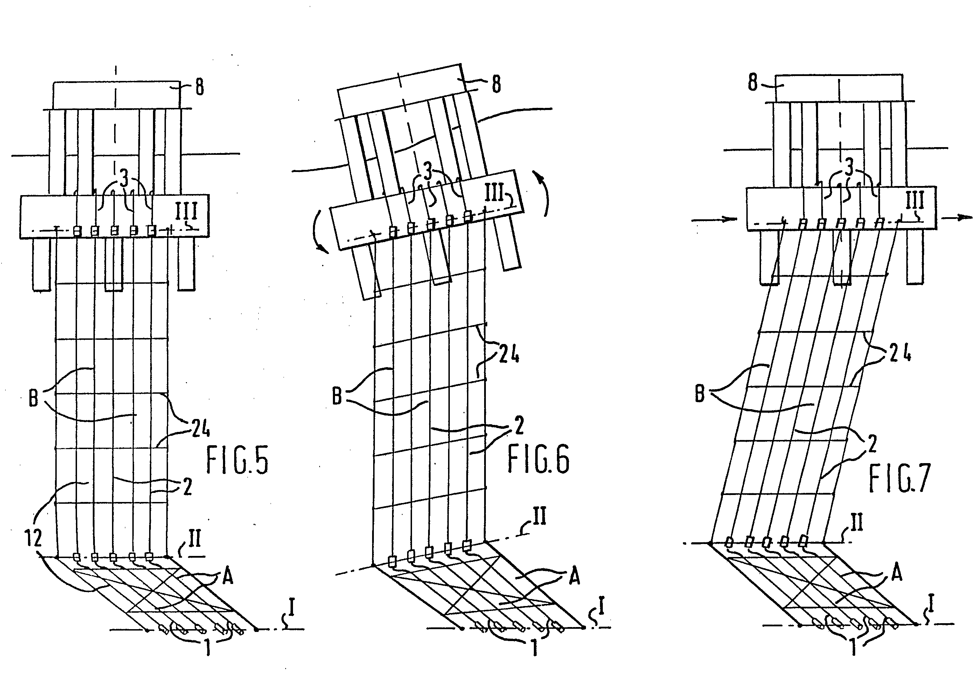

Fig. 5 shows a diagrammatic perspective view of the embodiment of the articulated conduit system 12 as shown in Figs. 1, 2 and 3.

The first axis I and the second axis II are substantially normal to the longitudinal direction of the conduits 1 of the frist group A in such a manner that said axes I and II and the conduits 1 are situated in a flat plane that is projected obliquely to the plane of the drawing.

The conduits 2 of the second group B, the second axis II, the third axis III and the conduits 3 lie in the plane of the drawing.

The conduits 2 of the second group B run in vertical direction; the spacer member 24, the second axis II and the third axis III run in horizontal direction.

. The situation shown in Fig. 5 occurs when the production unit 8 is in smooth water.

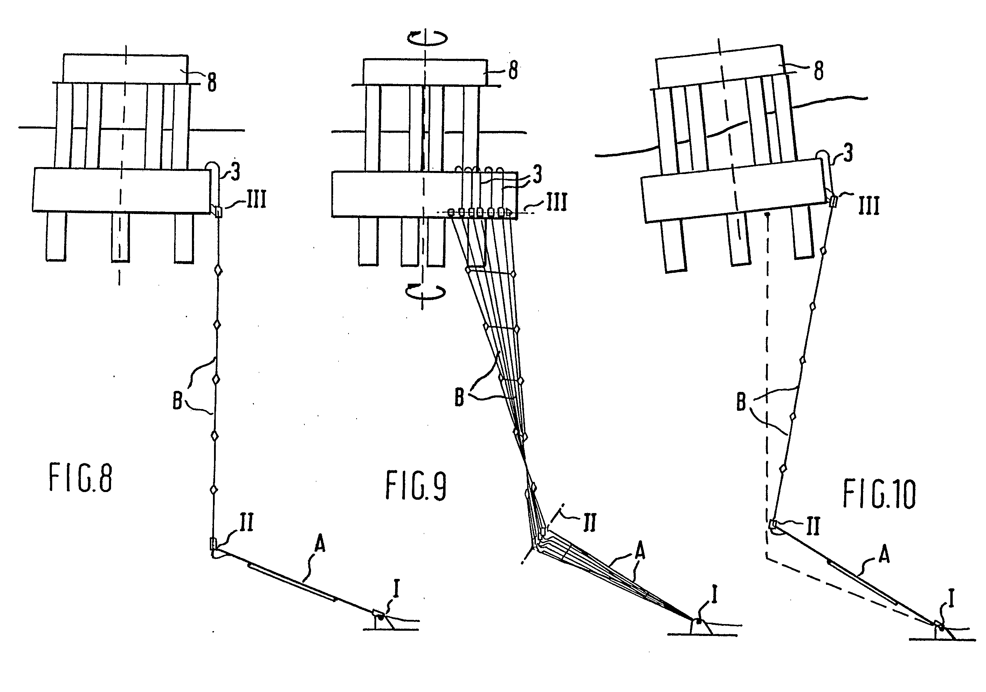

Fig. 6 shows a diagrammatic perspective view of the articulated conduit system shown in Fig. 5 but in the situation wherein the third axis III has been rotated about a horizontal axis normal to the plane of the drawing. This situation will arise when the production unit 8 starts rolling owing to the wave action of the water in which the production unit 8 is floating. The second group B will then be deformed into a parallelogram. The angular displacement of the second axis II can take place since the first conduit group A is part of a torsionally flexible mechanical structure.

Fig. 7 shows a diagrammatic perspective view of the articulated conduit system of Fig. 5, in a position wherein the floating production unit 8, together with the third axis III, has been displaced horizontally in a direction parallel to the longitudinal direction of the third axis III. Owing to this displacement, the second group B has been deformed into a parallelogram. The first group A is not deformed as the second axis II remains horizontal and is not displaced in horizontal direction during the displacement of the production unit.

Fig. 8 shows a diagrammatic perspective view of the articulated conduit system of Fig. 5, seen in horizontal direction parallel to the three axes I, II and III. In this view the axes are visible as the pivot points I, II and III. This situation occurs when the production unit 8 is in smooth water.

Fig. 9 shows the conduit system of Fig. 8 in deformed condition as a result of a rotary displacement of the production unit 8 about a vertical axis of rotation. Such displacement originates from yawing of the production unit 8. As a result of such displacement, axis II is rotated with respect to axis I and axis III is rotated with respect to axis II, while the first group A and the second group B are being warped. Warping of the groups A and B is possible because of the torsionally flexible design of each of the groups A and B.

Fig. 10 shows the conduit system of Fig. 8 in a position wherein axis III has been displaced in a direction normal to its own longitudinal direction owing to the displacement of the production unit 8. When being displaced, the first and second groups A and B and the conduits 3 rotate about the three axes I, II and III. It will be appreciated that the groups A and B are not deformed during this displacement.

It will be obvious that in practice the displacements shown in Figs. 6, 7, 9 and 10 will be superimposed in various combinations depending on the displacement of the floating production unit 8.

## Claims

1. Articulated conduit system for providing communication between conduits (such as pipelines or electric cables) arranged on or close to the bottom of a body of water and conduits on a body floating on the water surface, wherein the conduit system includes a first group of substantially parallel conduits and a second group of substantially parallel conduits, each conduit of the first group at one end thereof communicating with one end of a corresponding conduit of the second group by means of a universal joint, each conduit of the first group at the other end thereof carrying a pivot joint adapted for coupling the conduit to a corresponding conduit on the water bottom, the pivot points of these joints being located on a first axis, the pivot points of the universal joints between the first and second group being located on a second axis substantially parallel to the first axis, the first group of conduits extending between the first and second axis forming part of a mechanical structure of low torsional rigidity, and the other ends of the conduits of the second group being provided with coupling means adapted for coupling these conduits to conduits on the floating body.

2. The articulated conduit system as claimed in claim 1, wherein the second group of conduits forms part of a mechanical structure of low rigidity, and the coupling means at the other ends of the conduits of the second group are universal joints, the pivot points of these joints being located on a third axis substantially parallel to the second axis.

3. The articulated conduit system as claimed in claim 2, wherein the mechanical structure of the second group comprises at least one support running substantially parallel to the conduits of the second group and extending between one end of the first group and the floating body.

4. The articulated conduit system as claimed in claim 2 or 3, wherein the mechanical structure of the second group comprises spacer members for laterally supporting the conduits of the second group, the spacer members being transversely arranged in relation to the longitudinal direction of the conduits of said group, the conduits being flexibly connected to the spacer members.

5. The articulated conduit system as claimed in claims 3 and 4, wherein each support comprises a series of tensioning elements (such as rods or chains) that are pivotally connected with each other by means of linking elements attached to the spacer members, and wherein each support is at one end thereof connected to the mechanical structure of the first group by means of a universal joint located on the second axis, the other end of each support adapted for being connected to the floating body by means of a universal joint located on the third axis.

6. The articulated conduit system as claimed in any one of the claims 1—5, wherein the first group of conduits is combined with a frame of low torsional rigidity thereby forming a mechanical structure of low torsional rigidity, the frame being provided with pivots, having the pivot points thereof located on the first axis, and with pivots having the pivot points thereof located on the second axis.

7. The articulated conduit system as claimed in claim 6, wherein the frame comprises at least two longitudinal girders substantially parallel to the conduits of the first group, the longitudinal girders being interconnected by at least one tie rod arranged diagonally between the longitudinal girders.

8. The articulated conduit system as claimed in claim 6, wherein the frame is H-shaped and is built up of a T-shaped element and a transverse beam pivotally connected thereto.

9. The articulated conduit system as claimed in any one of the claims 1—8, wherein the conduits of the first group are kept at a predetermined mutual distance by spacer members that are transversely arranged in relation to the longitudinal direction of the conduits of said group, the conduits being flexibly connected to the spacer members.

## Patentansprüche

1. Gelenkiges Leitungssystem zum Verbinden von Leitungen (z.B. Rohrleitungen oder elektrische Kabel), die auf oder in der Nähe eines Gewässergrundes angeordnet sind, mit Leitungen auf einem auf dem Gewässer schwimmenden Körper, dadurch gekennzeichnet, daß das Leitungssystem eine erste Gruppe von zumindest annähernd parallelen Leitungen und eine zweite Gruppe von zumindest annähernd parallelen Leitungen aufweist, wobei jede Leitung der ersten Gruppe an einem ihrer Enden mit einem Ende einer entsprechenden Leitung der zweiten Gruppe mittels eines Universalgelenkes in Verbindung steht, jede Leitung der ersten Gruppe an ihrem anderen Ende ein Schwenkgelenk zum Kuppeln der Leitung mit einer entsprechenden Leitung auf dem Gewässergrund trägt, die Drehpunkte dieser Gelenke auf einer ersten Achse angeordnet sind, die Drehpunkte der Universalgelenke zwischen der ersten und der zweiten Gruppe auf einer zur ersten Achse zumindest annähernd parallelen zweiten Achse angeordnet sind, die erste Gruppe von Leitungen, die such zwischen der ersten und der zweiten Achse erstreckt, Teil eines mechanischen Aufbaues von geringer Drehsteifigkeit ist, un die anderen Enden der Leitungen der zweiten Gruppe mit Kupplungen zum Verbinden dieser Leitungen mit Leitungen auf dem schwimmenden Körper versehen sind.

2. Gelenkiges Leitungssystem nach Anspruch 1, dadurch gekennzeichnet, daß die zweite Gruppe von Leitungen Teil eines mechanischen Aufbaues von geringer Drehsteifigkeit ist, und die Kupplungen an den anderen Enden der Leitungen der zweiten Gruppe Universalgelenke sind, deren Drehpunkte auf einer zur zweiten Achse zumindest annähernd parallelel dritten Achse angeordnet sind.

3. Gelenkiges Leitungssystem nach Anspruch 2, dadurch gekennzeichnet, daß der mechanische Aufbau der zweiten Gruppe wenigstens einen Träger aufweist, der zu den Leitungen der zweiten Gruppe zumindest annähernd parallel ist und sich zwischen einem Ende der ersten Gruppe und dem schwimmenden Körper erstreckt.

4. Gelenkiges Leitungssystem nach Anspruch 2 oder 3, dadurch gekennzeichnet, daß der mechanische Aufbau der zweiten Gruppe Abstandhalter zum seitlichen Abstützen der Leitungen der zweiten Gruppe aufweist, wobei die Abstandhalter in bezug auf die Längsrichtung der Leitungen der genannten Gruppe quer angeordnet sind und die Leitungen mit den Abstandhaltern flexibel verbunden sind.

5. Gelenkiges Leitungssystem nach Anspruch 3 und 4, dadurch gekennzeichnet, daß jeder Träger eine Reihe von Zugelementen (z.B. Stangen oder Ketten) aufweist, die mittels an den Abstandhaltern befestigten Verbindungsgliedern schwenkbar miteinander verbunden sind, und daß jeder Träger an einem seiner Enden mittels eines auf der zweiten Achse angeordneten Universalgelenkes mit dem mechanischen aufbau der ersten Gruppe verbunden ist, wobei das andere Ende jedes Trägers mittels eines auf der dritten Achse angeordneten Universalgelenkes mit dem schwimmenden Körper verbindbar ist.

6. Gelenkiges Leitungssystem nach einem der Ansprüche 1 bis 5, dadurch gekennzeichnet, daß die erste Gruppe von Leitungen mit einem Rahmen von geringer Drehsteifigkeit kombiniert ist und dadurch einen mechanischen Aufbau von geringer Drehsteifigkeit bildet, wobei der Rahmen mit Schwenkgelenken, deren Drehpunkte auf der ersten Achse angeordnet sind, und mit Schwenkgelenken versehen ist, deren Drehpunkte auf der zweiten Achse angeordnet sind.

7. Gelenkiges Leitungssystem nach Anspruch 6, dadurch gekennzeichnet, daß der Rahmen wenigstens zwei zu den Leitungen der ersten Gruppe zumindest annähernd parallele Längsträger aufweist, die durch wenigstens eine zwisdhen ihnen diagonal angeordnete Verbindungsstange miteinander verbunden sind.

8. Gelenkiges Leitungssystem nach Anspruch 6, dadurch gekennzeichnet, daß der Rahmen H-förmig und aus einem T-förmigen Bauteil und einem mit diesem schwenkbar verbundenen Querbalken zusammengesetzt ist.

9. Gelenkiges Leitungssystem nach einem der Ansprüche 1 bis 8, dadurch gekennzeichnet, daß die Leitungen der ersten Gruppe in einem im voraus festgelegten gegenseitigen Abstand von Abstandhaltern gehalten sind, die in bezug auf die Längsrichtung der Leitungen der genannten Gruppe quer angeordnet sind, wobei die Leitungen mit den Abstandhaltern flexibel verbunden sind.

## Revendications

1. Système de conduits articulés pour fournir une comminication entre des conduits (comme des canalisations ou des câbles électriques) disposé sur ou près du fond d'une masse d'eau et des conduits situés sur un corps flottant à la surface de l'eau, où le système de conduits comprend un premier groupe de conduits essentiellement parallèles et un second groupe de conduits essentiellement parallèles, chacun des conduits du premier groupe à une de ses extrémités communiquant avec une extrémité d'un conduit correspondant du second group au moyen d'un joint universel, chacun des conduits du premier groupe à son autre extrémité portant un joint pivot adapté pour coupler le conduit à un conduit correspondant au fond de l'eau, les centres de rotation de ces joints étant situés sur un premier axe, les centres de rotation des joints universels entre le premier et le second groupes étant situtés sur un second axe essentiellement parallèle au premier axe, le premier groupe de conduits s'étendant entre le premier et le second axe faisant partie d'une structure mécanique à faible rigidité torsionnelle, et les autres extrémités des conduits du second groupe étant munies de moyens de couplage adaptés pour coupler ces conduits à des conduits situés sur le corps flottant.

2. Système de conduits articulés selon la revendication 1, où le second groupe de conduits fait partie d'une structure mécanique à faible rigidité, et les moyens de couplage aux autres extrémités des conduits du second groupe sont des joints universels, les centres de rotation de ces joints étant situé sur un troisième axe essentiellement parallèle au second axe.

3. Système de conduits articlés selon la revendication 2, où la structure mécanique du second groupe comprend au moins un support courant essentiellement parallèlement aux conduits du second groupe et s'étendant entre une extrémité du premier groupe et le corps flottant.

4. Système de conduits articulés selon l'une des revendications 2 ou 3, où la structure mécanique du second groupe comprend des pièces d'écartement pour supporter latéralement les conduits du second groupe, les pièces d'écartement étant disposées transversalement par rapport à la direction longitudinale des conduits dudit groupe, les conduits étant reliés de façon flexible aux pièces d'écartement.

5. Système de conduits articulés selon lres revendications 3 et 4, où chaque support comprend une série d'éléments de tension (comme des tiges ou des chaînes) qui sont reliés l'un à l'autre de manière à pivoter au moyen d'éléments de liaison attachés aux pièces d'écartement, et où chacun des supports est relié à l'une de ses extrémités à la structure mécanique du premier groupe au moyen d'un joint universel situé sur le second axe, l'autre extrémité de chaque support étant adaptée pour être reliée au corps flottant au moyen d'un joint universel situé sur le troisième axe.

6. Système de conduits articulés selon l'une quelconque des revendications 1—5, où le premier groupe de conduits est combiné avec un cadre de faible rigidité torsionnelle formant ainsi une structure mécanique de faible rigidité torsionnelle, le cadre étant muni de pivots, dont les centres de rotation sont situés sur le premier axe, et de pivots dont les centres de rotation sont situés sur le second axe.

7. Système de conduits articulés selon la revendication 6, où le cadre comprend au moins deux poutres longitudinales essentiellement parallèles aux conduits du premier groups, les poutres longitudinales étant interconnectées par au moins une barre de liaison disposée disgonalement entre les poutres longitudinales.

8. Système de conduits articulés selon la revendication 6, où le cadre a une forme en H et est constitué d'un élément en forme de T et d'une poutrelle transversale qui y est reliée de manière à pivoter.

9. Système de conduits articulés selon l'une quelconque des revendications 1—8, où les conduits du premier groupe sont maintenus à une distance mutuelle prédéterminée par des pièces d'écartement qui sont disposées de manière transversale par rapport à la direction longitudinale des conduits dudit groupe, les conduits étant reliés de façon flexible aux pièces d'écartement.

FIG.1

FIG.3

FIG.2

FIG.4

FIG.5    FIG.6    FIG.7

0 057 950

FIG.8

FIG.9

FIG.10